# EUROPÄISCHE PATENTSCHRIFT

(11) **EP 1 703 356 B1**
(45) Veröffentlichungstag und Bekanntmachung des Hinweises auf die Patenterteilung: **14.09.2011**
(21) Anmeldenummer: 05005525.0
(22) Anmeldetag: 14.03.2005
(51) Int. Cl.: G05D 23/00, F24F 11/00

(54) **Thermostat mit Farbanzeige**
Thermostat comprising a color display
Thermostat avec un écran couleur

(43) Veröffentlichungstag der Anmeldung: 20.09.2006
(73) Patentinhaber: emz-Hanauer GmbH & Co. KGaA, 92507 Nabburg (DE)
(72) Erfinder: Schober, Silvia, 92536 Pfreimd (DE)
(74) Vertreter: von Hellfeld, Axel

(56) Entgegenhaltungen:
- DE-A1- 3 100 276
- DE-A1- 4 320 103
- DE-C2- 4 447 893
- US-B1- 6 726 112

## Beschreibung

Die Erfindung betrifft einen Thermostaten, insbesondere für Heizkörper.

Ein Thermostat ist ein Temperaturregler, mit dem eine gewünschte Temperatur (ein Sollwert der Temperatur) einstellbar ist. Allgemein bekannt sind solche Thermostaten im Zusammenhang mit Raumheizungen, wo sie am Heizkörper montiert sind und in Abhängigkeit vom in der Regel manuell eingestellten Sollwert der Temperatur die Strömung eines Heizmediums, in der Regel heißes Wasser, durch den Heizkörper mittels eines Ventils steuern. Nachfolgend wird die Erfindung mit Blick auf einen derartigen Einsatz eines Thermostaten erläutert, jedoch kann der erfindungsgemäße Thermostat auch bei anderen Temperaturregelungen eingesetzt werden.

Die üblichen bekannten Thermostaten haben einen um seine Längsachse drehbaren Thermostatkörper, der bei der Drehung ein Ventil, je nach Drehrichtung, mehr oder weniger öffnet und so den Durchfluss eines heißen Heizmediums durch den Heizkörper steuert. Der Drehkörper ist mit einer Skala versehen, üblicherweise mit Zahlen oder einer Rampe, um dem Benutzer die momentane Drehstellung (Winkelstellung) des Drehkörpers des Thermostaten anzuzeigen.

Die DE 100 19 980 A1 beschreibt ein energiesparendes Thermostatventil mit einem Temperaturfühler für die Raumlufttemperatur und einem optisch wirkenden Signalgeber zur Anzeige bestimmter Schaltvorgänge. Die DE 30 46 835 C1 zeigt einen Thermostataufsatz für Heizkörperventile, der eine Einstellung zur Festlegung eines maximalen Durchflusses ermöglicht. Eine elektrische Anzeigevorrichtung ist vorgesehen, um einen Einstellzustand anzuzeigen. Die US 2002/0190058 A1 zeigt ein Thermostatventil mit Anzeigeeinrichtungen auf einer Stirnseite des Ventils. Die EP 0 495 977 B1 schließlich beschreibt ein Thermostatventil mit einer Stellungsanzeige und einem Indikator, der zur besseren Sichtbarkeit mit einer leuchtenden Farbe versehen ist.

Der Erfindung liegt die Aufgabe zugrunde, einen Thermostaten so auszugestalten, dass er bequemer und sicherer zu bedienen ist.

Ein diese Aufgabe lösender Thermostat ist im Patentanspruch 1 beschrieben. Bevorzugte Ausgestaltungen des Thermostates sind in den abhängigen Ansprüchen beschrieben.

Mit den Thermostaten ist es möglich, einem Benutzer des Thermostaten in einfacher Weise durch Änderung der Farbe der Anzeigeeinrichtung eine Information zu geben über einen Temperaturwert. Bei dem Temperaturwert kann es sich zum Beispiel um einen Sollwert der Temperatur handeln, der mit dem Thermostaten eingestellt werden soll. Gemäß einer anderen Ausgestaltung der Erfindung kann es sich bei dem Temperaturwert auch um einen Istwert handeln, der gerade an einer vorgegebenen Stelle am oder im Heizkörper gemessen wird.

Zum Beispiel kann bevorzugt die genannte LED-Anzeigeeinrichtung so von der Schaltung angesteuert werden, dass dann, wenn der genannte Temperaturwert relativ hoch ist, die LED-Anzeigeeinrichtung rot leuchtet, während dann, wenn der Temperaturwert relativ gering ist, die Anzeigeeinrichtung im blauen oder grünen Bereich des sichtbaren Teils des elektromagnetischen Spektrums leuchtet. Zwischenwerte bezüglich des Temperaturwertes können sich dann bevorzugt kontinuierlich entsprechend der Farbskala analog von blau/grün zu rot ändern, also über gelb, orange etc.

Mit zumindest drei verschiedene Farben emittierenden LEDs, die einzeln ansteuerbar sind, können praktisch beliebige Farben durch Mischung hergestellt werden.

Im Vergleich zu einer herkömmlichen Anzeigeeinrichtung, ist die erfindungsgemäße aus größerer Entfernung gut sichtbar, sodass ein Benutzer nicht nahe an den Thermostaten herantreten muss, um dessen Einstellzustand zu erkennen. Auch ist ein relativ hoch eingestellter Sollwert, der stark energieverbrauchend ist, dem Benutzer jederzeit deutlich präsentiert, sodass er einen Hinweis erhält, dann, wenn die Heizung nicht mehr erforderlich ist, den Sollwert tiefer einzustellen. Diesen Zweck erfüllt vor allem eine Kennzeichnung eines hohen Sollwertes mittels der LED-Anzeigeeinrichtung als leuchtend rot.

Gemäß einer bevorzugten Ausgestaltung ist die LED-Anzeigeeinrichtung so am Thermostaten angeordnet, dass sie sowohl in Richtung der Achse des Thermostaten als auch senkrecht dazu, also von der Seite her, gut erkennbar ist. Dabei erstreckt sich die LED-Anzeigeeinrichtung also teilweise über die freie Stirnfläche des Thermostaten und teilweise über dessen Seitenfläche. Letztere ist üblicherweise die Grifffläche, an welcher der Benutzer den Thermostaten erfasst, um ihn zur Einstellung einer Soll-temperatur zu drehen, wobei die Drehung gleichzeitig die Ventilstellung ändert.

Nachfolgend werden Ausführungsbeispiele erfindungsgemäßer Thermostaten unter Bezugnahme auf die Zeichnung näher erläutert. Es zeigt bzw. zeigen:
- Figuren 1A und 1B: ein erstes Ausführungsbeispiel eines Thermostaten;
- Figuren 2A, 2B: ein zweites Ausführungsbeispiel eines Thermostaten;
- Figur 3: ein drittes Ausführungsbeispiel eines Thermostaten;
- Figur 4: ein viertes Ausführungsbeispiel eines Thermostaten zur Verwendung mit einem Heizkörper;
- Figur 5: ein fünftes Ausführungsbeispiel eines Thermostaten; und
- Figur 6: ein Schaltbild für eine Steuerung eines Thermostaten gemäß den Figuren 1 bis 5.

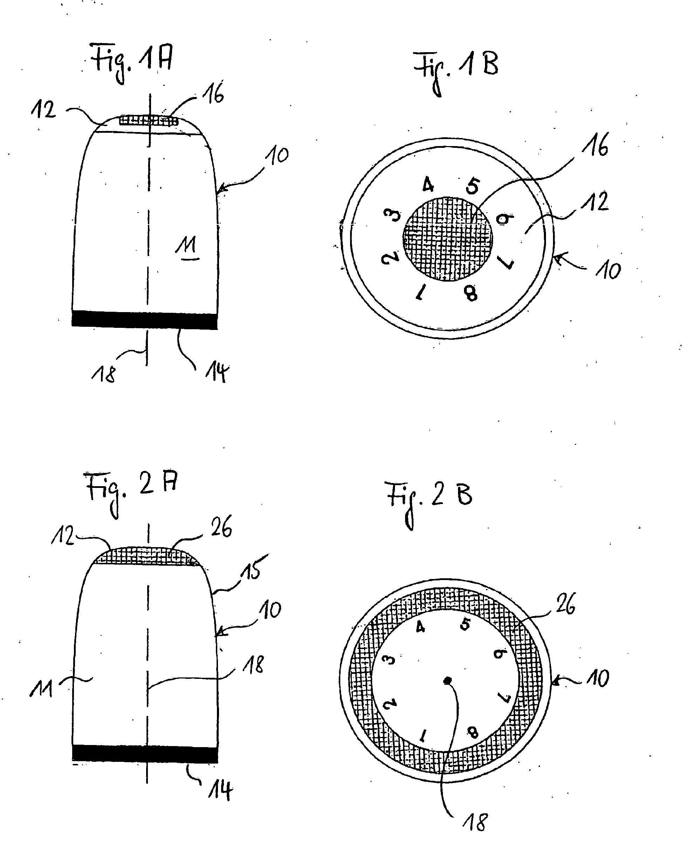

Die Figuren 1 bis 5 zeigen schematisch einen Thermostaten 10 mit einem Drehkörper 11, der an einem Heizkörper (nicht gezeigt) zu montieren ist. Wie üblich, wird der Thermostat 10 an der Montageseite 14 an einem Zufluss für den Heizkörper montiert und der Thermostat 10 steuert ein Ventil (nicht gezeigt), das den Durchfluss eines Heizmediums (zum Beispiel Wasser) durch den Heizkörper steuert. Zur Änderung des Sollwertes der Temperatur des Heizkörpers wird der Drehkörper 11 des Thermostaten 10 um dessen Längsachse 18 in bekannter Weise gedreht. Insoweit entspricht der Thermostat 10 dem Stand der Technik.

Beim Ausführungsbeispiel gemäß den Figuren 1A, 1B befindet sich an der Stirnseite 12 des Drehkörpers 11, die der Montageseite 14 gegenüberliegt, eine LED-Anzeigeeinrichtung 16. Figur 1B zeigt die LED-Anzeigeeinrichtung 16 in Draufsicht, also in Richtung der Achse 18 gesehen. Neben der LED-Anzeigeeinrichtung 16 ist der Thermostat noch mit Ziffern 1, 2, ..... markiert, die in herkömmlicher Weise eine Drehstellung zusätzlich anzeigen, falls zum Beispiel die Anzeigeeinrichtung 16 ausfällt.

Die LED-Anzeigeeinrichtung 16 kann eine Vielzahl von in unterschiedlichen Farben emittierenden LEDs aufweisen, die matrixartig über die Fläche der Anzeigevorrichtung verteilt sind und dann, wenn sie über eine Steuerschaltung (siehe unten) mit elektrischem Strom versorgt werden, in ausgewählten Farben Licht emittieren. Durch ausgewählte Kombinationen unterschiedlicher LEDs können dann in an sich bekannter Weise praktisch sämtliche Farben des für das menschliche Auge sichtbaren Bereichs des elektromagnetischen Spektrums erzeugt werden, oder auch daraus nur bestimmte ausgewählte Farben, wie grün, gelb und rot. Bevorzugt ist aber eine höher aufgelöste Darstellung unterschiedlicher Farben, zum Beispiel in Analogie zu einer prismatischen Farbaufteilung ("Regenbogen").

Die Figuren 2A, 2B zeigen ein weiteres Ausführungsbeispiel eines Thermostaten 10, wobei in allen Figuren einander entsprechende Komponenten mit gleichen Bezugszeichen versehen sind. Beim Ausführungsbeispiel gemäß den Figuren 2A, 2B erstreckt sich die LED-Anzeigeeinrichtung 26 sowohl über die Stirnseite 12 des Drehkörpers 11 als auch teilweise über dessen Seitenfläche 15. Dies ergibt gemäß Figur 2B eine ringförmige Gestalt der LED-Anzeigeeinrichtung 26, die praktisch aus allen Richtungen gut erkennbar ist. Einzelheiten der LED-Anzeigeeinrichtung 26 können analog gestaltet sein, wie oben anhand der LED-Anzeigeeinrichtung 16 beschrieben.

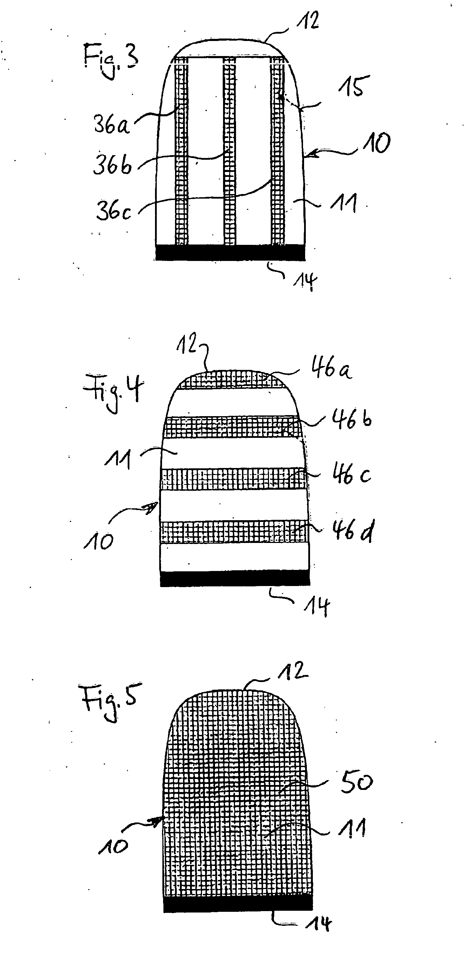

Die Figuren 3, 4 und 5 zeigen weitere mögliche unterschiedliche Ausgestaltungen des Thermostaten 10. Das Ausführungsbeispiel nach Figur 3 zeigt mehrere LED-Anzeigeeinrichtungen 36a, 36b, 36c, die sich parallel zur Längsachse 18 (vgl. Figur 1, 2) entlang der Seitenfläche 15 des Drehkörpers 11 erstrecken.

Figur 4 zeigt eine Variante, bei der sich mehrere LED-Anzeigeeinrichtungen 46b, 46c, 46d ringförmig bzw. kappenförmig (46a) in Bezug auf den Drehkörper 11 erstrecken.

Figur 5 zeigt ein Ausführungsbeispiel, bei dem praktisch der gesamte Drehkörper 11 des Thermostaten 10 mit einer LED-Anzeigeeinrichtung 50 überzogen ist.

Bei den Ausführungsbeispielen nach den Figuren 3, 4 und 5 werden alle gezeigten LED-Anzeigeeinrichtungen gleich farblich gesteuert, d.h. es sind entweder alle LED-Anzeigeeinrichtungen zu einem bestimmten Zeitpunkt zum Beispiel rot und zu einem anderen Zeitpunkt, d.h. bei einer anderen Einstellung zum Beispiel der Solltemperatur, grün oder gelb oder sie nehmen eine andere Farbe an.

Mit anderen Worten: Die in den Figuren jeweils quadratisch schraffiert dargestellten LED-Anzeigeeinrichtungen leuchten über die gesamte dargestellte Fläche zu einem gegebenen Zeitpunkt jeweils in einer einzigen Farbe, zum Beispiel rot, wenn der Temperaturwert relativ hoch eingestellt ist, oder grün, wenn der Temperaturwert relativ tief eingestellt ist. Grundsätzlich stehen für solche Farbgebungen insbesondere zwei Möglichkeiten zur Verfügung: Erstens können jeweils einzelne Pixels aus drei kleinen LEDs unterschiedlicher Farbe gebildet werden, wobei dann die einzelnen Pixels von der Schaltung so angesteuert werden, dass alle Pixels dieselbe Farbe mischen, zum Beispiel rot, oder zweitens können über die gesamte Fläche (das Feld) der Anzeigeeinrichtung unterschiedlich emittierende LEDs gleichmäßig verteilt werden, wobei dann zur Erzeugung einer bestimmten Farbe nur diejenigen LEDs angesteuert werden, die genau diese Farbe erzeugen.

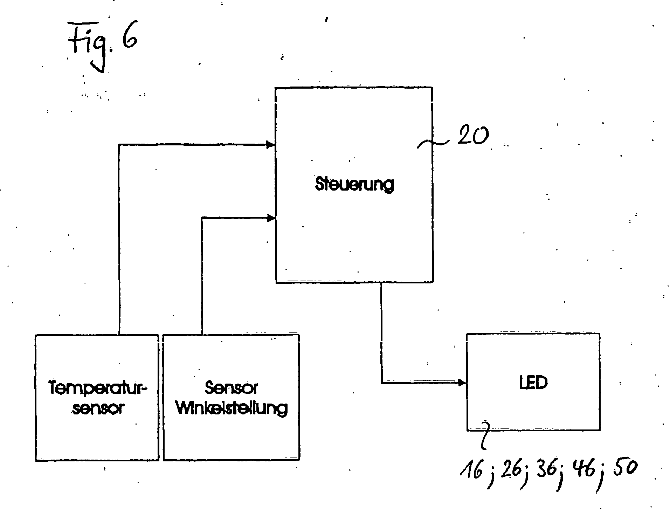

Figur 6 zeigt schematisch eine Steuerschaltung zu Ansteuern der einzelnen LEDs, die in den oben genannten LED-Anzeigeeinrichtungen wirksam sind. In Figur 6 sind die genannten LED-Anzeigeeinrichtungen 16, 26, 36, 46, 50 durch den Block "LED" dargestellt. Eine Steuerung 20 steuert die einzelnen LEDs, die jeweils die LED-Anzeigeeinrichtungen ausmachen. Zum Beispiel kann jede LED-Anzeigeeinrichtung drei verschiedene LEDs haben, die jeweils so unterschiedliche Farben emittieren, dass sie entsprechend ihrer elektrischen Ansteuerung sehr unterschiedliche Farben des sichtbaren Spektrums zusammenfügen können. Die Erzeugung unterschiedlicher Farben aus drei Grundfarben ist als solches gut bekannt.

Figur 6 beinhaltet zwei unterschiedliche Ausführungsbeispiel für die Einstellung unterschiedlicher Temperaturwerte mittels der LED-Anzeigeeinrichtung. Gemäß einer ersten Variante erhält die Steuerung 20 ein Signal über den Drehzustand des Drehkörpers 11, also ein Signal über dessen Winkelstellung. Entsprechend diesem die Winkelstellung wiedergebenden Signal steuert dann die Steuerung 20 die einzelnen LEDs, die jeweils die LED-Anzeigeeinrichtungen bilden, wahlweise so an, dass zu einer bestimmten Winkelstellung eine bestimmte Farbe gehört. Wie oben beschrieben, kann zum Beispiel einer Winkelstellung bei der das Durchlassventil des Thermostaten maximal geöffnet ist, in der LED-Anzeigeeinrichtung die Farbe rot zugeordnet werden. Einer Winkelstellung, bei der hingegen das Ventil vollständig oder fast vollständig geschlossen ist, kann in der LED-Anzeigeinrichtung die Farbe grün zugeordnet werden. Dazwischen liegenden Winkelstellungen können dann die einzelnen Regenbogenfarben mehr oder weniger fein aufgelöst in der LED-Anzeigeeinrichtung zugeordnet werden. Diese Farbzuordnung leistet die Steuerung 20 dadurch, dass sie die einzelnen LEDs so ansteuert, dass jeweils die gewünschte Gesamtfarbe z.B. durch Mischung erzeugt wird.

Bei einer alternativen Ausgestaltung erhält die Steuerung 20 ein Signal von einem Temperatursensor, der zum Beispiel einen Temperaturwert erfasst, welcher der Temperatur des Heizkörpers an einer vorgegebenen Stelle entspricht. Mit diesem Temperatursignal steuert dann die Steuerung 20 die einzelnen LEDs der LED-Anzeigeeinrichtung 16, 26, 36, 46, 50 wie oben beschrieben analog an, sodass der Benutzer eine Information erhält über den Heizzustand des Heizkörpers.

Es ist auch möglich, die beiden vorstehend erläuterten Varianten mit Winkelstellungssensor und Temperatursensor gemeinsam in einer einzigen Vorrichtung zu kombinieren derart, dass mit einem Umschalter jeweils eine der beiden Benutzungsarten ausgewählt werden kann. Der Benutzer kann sich dann wahlweise über die LED-Anzeigeeinrichtung den Temperaturzustand des vom Thermostaten gesteuerten Heizkörpers anzeigen lassen und zum anderen den Sollwert der Temperatur, auf den der Heizkörper geregelt werden soll.

In Abwandlung des anhand der Figuren 1 bis 6 beschriebenen Ausführungsbeispieles kann die Anzeigeeinrichtung nicht am Drehkörper 11 angeordnet werden, sondern auf der Montageseite des Thermostaten, also an dem Teil des Thermostaten, der ortsfest an der Zuleitung zur Heizung montiert ist und sich nicht dreht. Dann hätte die Anzeigeeinrichtung immer dieselbe Position an der Heizung, unabhängig von der Stellung des Drehkörpers 11, was die Sichtbarkeit der Anzeige fördern und die Bedienung vereinfachen kann.

Bei dem oben beschriebenen Ausführungsbeispiel wird der Sollwert der Temperatur über die Drehung des Drehkörpers 11 des Thermostaten eingestellt. Der Thermostat kann gemäß einer Variante der Erfindung dahingehend abgewandelt werden, dass der Sollwert der Temperatur auf andere Weise eingegeben wird, zum Beispiel mittels eines Tasters. Dann wäre der Funktionsblock "Sensorwinkeleinstellung" in Figur 6 zu ersetzen durch einen Funktionsblock "Eingabeelement für Temperatur-Sollwert".

Allgemein können für die Anzeigeinrichtung mehrere Ringe/Streifen, Teilflächen auf dem Thermostaten angeordnet werden.

Die vorstehend mit Blick auf Thermostaten beschriebene Anzeige von Wassertemperaturen kann auch auf Mischbatterien für Brauchwasser übertragen werden. Eine Mischbatterie für Brauchwasser mischt kaltes und heißes Wasser und ein Benutzer kann einen Sollwert für die Temperatur des so gemischten Wassers einstellen. Dann wird dem Benutzer die gerade eingestellte Soll-Temperatur des Wassers über unterschiedliche Farben angezeigt, also zum Beispiel rot für sehr heiß, gelb für "wohltemperiert" oder grün für kalt, jeweils bezogen auf das Temperaturempfinden der menschlichen Haut. Analog dem oben anhand von Thermostaten beschriebenen Ausführungsbeispielen kann bei einer Wasser-Mischbatterie auch der jeweilige Istwert der Temperatur des gemischten Wassers mit einer Anzeigeeinrichtung farbig angezeigt werden. Zum Beispiel kann bei einer Mischbatterie ein Drehkörper (Drehknopf) vorgesehen werden, der vom Benutzer zur Einstellung eines Sollwertes der Temperatur gedreht werden kann. Die Anzeigeeinrichtung zeigt dann den Temperaturwert farbig an. Der Drehknopf kann direkt an der Mischbatterie oder auch entfernt davon angeordnet sein. Zum Beispiel bei Duschen, insbesondere in Hotels, ist häufig ein Drehknopf zur Einstellung der Solltemperatur des aus heißem und kaltem Wasser zu mischenden Duschwassers vorgesehen. Hierfür eignet sich die vorstehend beschriebene farbige Anzeige mit einem Drehkörper besonders. Dabei kann die farbige Anzeige zusätzlich zu einer herkömmlichen Markierung mit grafischen Symbolen, zum Beispiel Zahlen, vorgesehen sein, analog der obigen Beschreibung von Drehkörpern bei einem Thermostaten. Bei der Mischbatterie mit farbiger Anzeige der Temperatur kann die Anzeigeeinrichtung an der Mischbatterie, nahe derselben oder auch entfernt von dieser angeordnet werden, je nach Anwendung, zum Beispiel Handwaschbecken, Duschanlage oder dergleichen.

## Patentansprüche

1. Thermostat mit einem Drehkörper (11), der eine seitliche Umfangsfläche (15) und eine Stirnfläche (12) hat, und mit einer LED-Anzeigeeinrichtung zum farbigen Anzeigen von Soll- oder Isttemperaturen versehen ist, **dadurch gekennzeichnet, dass** die Anzeigeeinrichtung (16; 26; 36; 46; 50) eine Mehrzahl von LEDs aufweist, die matrixartig über eine Fläche verteilt sind, derart, dass zur Erzeugung einer einzigen Farbe, mit der die gesamte Fläche der Anzeigeeinrichtung leuchtet, entweder jeweils zumindest drei LEDs unterschiedlicher Farbe ein Pixel in der matrixartigen Fläche der Anzeigeeinrichtung bilden, um durch Lichtmischung die einzige Farbe zu erzeugen, oder dass über die gesamte Fläche der Anzeigeeinrichtung unterschiedliche Farben emittierende LEDs verteilt sind, die zur Erzeugung der genannten einzigen Farbe wahlweise ansteuerbar sind, wobei sich die flächige Anzeigeeinrichtung entweder ringförmig um den Drehkörper (11), oder kappenförmig an der Stirnfläche, oder streifenförmig an der Umfangsfläche des Drehkörpers erstreckt.

2. Thermostat nach Anspruch 1, **dadurch gekennzeichnet, dass** die genannte einzige Farbe, die mit der LED-Anzeigeeinrichtung wahlweise einstellbar ist, aus mehreren Farben des elektromagnetischen Spektrums auswählbar ist.

3. Thermostat nach einem der vorhergehenden Ansprüche, **dadurch gekennzeichnet, dass** die Anzeigeeinrichtung (26; 46; 50) sich teilweise über die Stirnfläche (12) und teilweise über die Umfangsfläche (15) des Drehkörpers (11) erstreckt.

## Claims

1. A thermostat comprising a rotary body (11), which has a lateral circumferential surface (15) and a front surface (12) and is provided with a LED display means for colored display of nominal and actual temperatures, **characterized in that** the display means (16; 26; 36; 46; 50) comprises a plurality of LEDs which are distributed across a surface in the manner of a matrix such that, in order to generate a single color in which the entire surface of the display means is illuminated, either at least three LEDs of different color respectively form a pixel in the matrix-like surface of the display means for generating a single color by mixing light or LEDs emitting different colors are distributed across the entire surface of the display means, which LEDs may be optionally controlled for generating said single color, wherein the laminar display means extends either in the shape of a ring around the rotary body (11) or in the shape of a cap at the front surface or in the shape of a strip at the circumferential surface of the rotary body.

2. The thermostat according to claim 1,
**characterized in that** said single color which may optionally be ajdusted by the LED display means can be selected from a plurality of colors of the electromagnetic spectrum.

3. The thermostat according to any one of the preceding claims,
**characterized in that** the display means (26; 26; 50) extends in part across the front surface (12) and in part across the circumferential surface (15) of the rotary body (11).

## Revendications

1. Thermostat muni d'un corps rotatif (11) qui possède une surface circonférentielle latérale (15) et une surface frontale (12) et qui est équipé d'un dispositif d'affichage LED permettant l'affichage en couleur de températures théoriques et de températures réelles, **caractérisé en ce que** ledit dispositif d'affichage (16 ; 26 ; 36 ; 46 ; 50) présente une pluralité de diodes électroluminescentes réparties sur une surface sous forme de matrice de telle sorte que, pour produire une seule couleur d'éclairage sur toute la surface du dispositif d'affichage, trois diodes électroluminescentes de couleur différente formeront à chaque fois un pixel dans la surface conçue sous forme de matrice pour produire une seule couleur par mélange de lumière, ou que des diodes électroluminescentes émettant des couleurs différentes et commandables sélectivement pour produire ladite seule couleur seront réparties sur toute la surface du dispositif d'affichage, le dispositif d'affichage surfacique s'étendant soit de façon annulaire autour du corps rotatif (11), soit sous la forme d'un capuchon sur la surface frontale, soit sous forme de bandes sur la surface circonférentielle du corps rotatif.

2. Thermostat selon la revendication 1, **caractérisé en ce que** ladite seule couleur réglable sélectivement par l'intermédiaire du dispositif d'affichage LED peut être choisie parmi plusieurs couleurs du spectre électromagnétique.

3. Thermostat selon l'une des revendications précédentes, **caractérisé en ce que** le dispositif d'affichage (26 ; 46 ; 50) s'étend en partie sur la surface frontale (12) et en partie sur la surface circonférentielle (15) du corps rotatif.
